# EUROPEAN PATENT APPLICATION

(11) **EP 2 981 114 A1**
(43) Date of publication of application: **03.02.2016**
(21) Application number: 14775601.9
(22) Date of filing: 20.03.2014
(51) Int. Cl.: H04W 12/06, H04L 9/08, H04L 9/32, H04L 12/66, H04W 4/00, H04W 12/04, H04W 84/22

(54) **COMMUNICATION SYSTEM, RELAY DEVICE AND COMMUNICATION METHOD**

(30) Priority: 27.03.2013 JP 2013067138
(71) Applicant: NTT DOCOMO, INC., Chiyoda-ku Tokyo 100-6150 (JP)
(72) Inventor: KOSHIMIZU, Takashi, Tokyo 100-6150 (JP)
(74) Representative: Hoffmann Eitle
(86) International application number: PCT/JP2014/057794
(87) International publication number: WO 2014/156968

(57) **Abstract**

Provided are a communication system, a relay apparatus, and a communication method capable of achieving high security in a case of controlling devices such as electric power meters and acquiring data from the devices by connecting an autonomous distributed near field communication network such as a smart utility network to a public radio communication network. A relay apparatus 100 establishes a radio bearer with security ensured with a radio base station 40 by using a secret key associated with the relay apparatus 100 in the public radio communication network. Then, the relay apparatus 100 acquires a secret key associated with the terminal device 200A via the radio bearer from an HSS 50, and executes security setup processing including authentication of the terminal device 200A by using the acquired secret key.

## Description

### TECHNICAL FIELD

The present invention relates to a communication system including a near field communication network configured by multiple terminal devices, and a wide area communication network covering a wider area than the near field communication network, and relates to a relay apparatus and a communication method.

### BACKGROUND ART

IEEE802.15.4e/g is a near field communication technique (mainly for a physical layer and a MAC layer) that autonomously builds distributed multi-hop routing using a radio band of 920 MHz, and has been standardized in order to be applied to machine type Communication (MTC) for reading electric power meters of households or doing the like (For example, Non-Patent Literature 1). In addition, a standard of a smart utility network (SUN) has been also defined in conformity with IEEE802.15.4e/g.

An autonomous distributed multi-hop radio communication technique in accordance with IEEE802.15.4e/g may be used solely, but is desired to be used for communications via a wide area network (WAN) such as a public radio communication network (3G or LTE) with a server that is executing management of data on electric power meters or other processing (for example, a meter data management system (MDMS)).

### PRIOR ART DOCUMENT

### NON-PATENT DOCUMENT

Non-patent document 1: Ubiquitous Sensor Networks, the journal of Institute of electronics, information and communication engineers, pp. 772-778, Vol.95 No.9, 2012.

### SUMMARY OF THE INVENTION

However, the following problem arises in the case of executing management of data of electric power meters or other processing via a public radio communication network (3G or LTE) . Specifically, IEEE802.15.4e/g mainly defines the specifications of the physical layer and the MAC layer. Hence IEEE802.15.4e/g does not particularly define security functions, which are to be generally implemented in an upper layer (third or upper layer) above the physical layer and the MAC layer, for example, an authentication and a security setup method for terminal devices.

In order to make up for such defective points in the standard, the ZigBee specification, for example, or the like needs to be used to implement an authentication and a security setup method for terminal devices in upper layers above the layers of IEEE802.15.4e/g. These specifications are generally based on the precondition that a secret key is exchanged between a terminal device and a network via a public network such as the Internet. Accordingly, these specifications have a lack of capabilities to enable a terminal device and a network (public radio communication network) to share a secret key in advance safely without fail, although the secret key is essential to ensure the security (i.e., the authentication, integrity and confidentiality). For this reason, there is a demand to make improvement for such situations and to ensure higher security.

Therefore, the present invention has been made in view of these circumstances, and has an objective to provide a communication system, a relay apparatus, and a communication method which are capable of achieving higher security in the case of implementing control of devices such as electric power meters and data acquisition from the devices by connecting a near field communication network such as a smart utility network to a wide area communication network such as a public radio communication network.

A first feature of the present invention is summarized as a communication system including: a terminal device capable of configuring a near field communication network; and a relay apparatus provided between the near field communication network and a public radio communication network that includes a subscriber management apparatus configured to manage the terminal device and covers a wider area than the near field communication network. Here, the relay apparatus includes: a radio bearer establishment unit for establishing a radio bearer with security ensured with a radio base station configuring the public radio communication network, by using a relay apparatus secret key associated with the relay apparatus in the public radio communication network; a secret key acquisition unit for acquiring a terminal device secret key associated with the terminal device via the radio bearer from the subscriber management apparatus; and a terminal security setup unit for executing security setup processing including authentication of the terminal device by using the terminal device secret key acquired by the secret key acquisition unit, and the terminal device includes: a secret key holding unit for holding the terminal device secret key associated with the terminal device; and a security setup unit for executing the security setup processing including the authentication with the relay apparatus by using the terminal device secret key held by the secret key holding unit.

A second feature of the present invention is summarized as a relay apparatus provided between a near field communication network configured by a plurality of terminal devices, and a public radio communication network that includes a subscriber management apparatus configured to manage the terminal devices and covers a wider area than the near field communication network, the relay apparatus including: a radio bearer establishment unit for establishing a radio bearer with security ensured with a radio base station configuring the public radio communication network, by using a relay apparatus secret key associated with the relay apparatus in the public radio communication network; a secret key acquisition unit for acquiring a terminal device secret key associated with any of the terminal devices via the radio bearer from the subscriber management apparatus; and a terminal security setup unit for executing security setup processing including authentication of the terminal device by using the terminal device secret key acquired by the secret key acquisition unit.

A second feature of the present invention is summarized as communication method to be executed by a terminal device capable of configuring a near field communication network, and a relay apparatus provided between the near field communication network and a public radio communication network that includes a subscriber management apparatus configured to manage the terminal device and covers a wider area than the near field communication network, the method comprising the steps of: causing the relay apparatus to establish a radio bearer with security ensured with a radio base station configuring the public radio communication network, by using a relay apparatus secret key associated with the relay apparatus in the public radio communication network; causing the relay apparatus to acquire a terminal device secret key associated with the terminal device via the radio bearer from the subscriber management apparatus; and causing the relay apparatus to execute security setup processing including authentication with the terminal device, by using the terminal device secret key acquired by the secret key acquisition unit, while causing the terminal device to execute the security setup processing including the authentication of the relay apparatus, by using a relay apparatus secret key held by the terminal device and associated with the terminal device.

### BRIEF DESCRIPTION OF THE DRAWING

[Fig. 1] Fig. 1 is an overall schematic configuration diagram of a communication system 10 according an embodiment of the present invention.
[Fig. 2] Fig. 2 is a functional block configuration diagram of a relay apparatus 100 according to the embodiment of the present invention.
[Fig. 3] Fig. 3 is a functional block configuration diagram of a terminal device 200A according to the embodiment of the present invention.
[Fig. 4] Fig. 4 is a diagram illustrating a security procedure executed by an HSS 50, the relay apparatus 100, and the terminal device 200A according to the embodiment of the present invention.

### MODE FOR CARRYING OUT THE INVENTION

Next, an embodiment of the present invention will be described. Note that, in the following description of the drawings, same or similar reference signs denote same or similar elements and portions. In addition, it should be noted that the drawings are schematic and ratios of dimensions and the like are different from actual ones.

Therefore, specific dimensions and the like should be determined in consideration of the following description. Moreover, the drawings also include portions having different dimensional relationships and ratios from each other.

### (1) Overall Schematic Configuration of Communication System

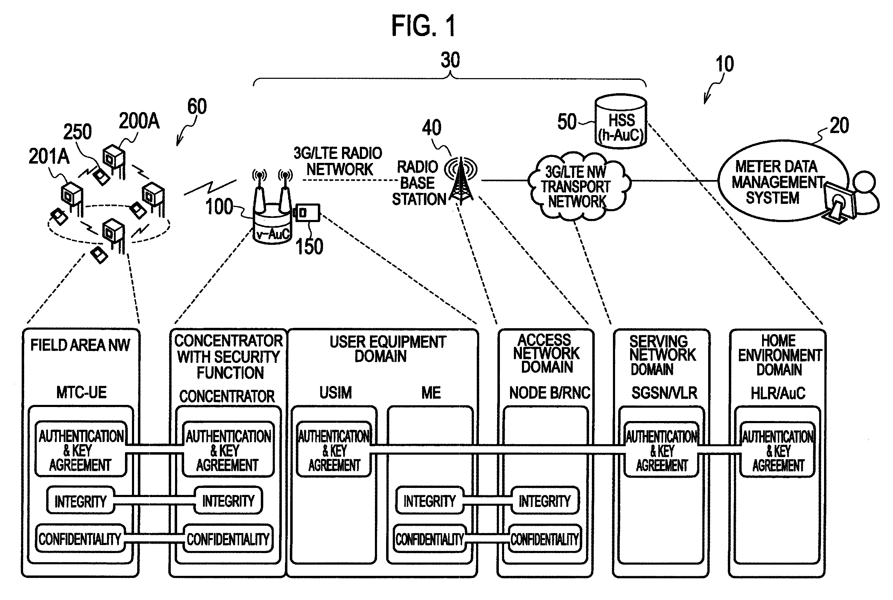

Fig. 1 is an overall schematic configuration diagram of a communication system 10 according to the present embodiment. As illustrated in Fig. 1, the communication system 10 includes a meter data management system 20 (hereinafter, the MDMS 20), a public radio communication network 30, a near field communication network 60, and a relay apparatus 100.

The MDMS 20 manages multiple terminal devices (for example, terminal devices 200A, 201A, and the like) configuring the near field communication network 60. Specifically, the MDMS 20 is a server connected to the public radio communication network 30, and configured to transmit commands to the terminal devices and acquire data transmitted from the terminal devices.

In the present embodiment, the public radio communication network 30 is a radio network in conformity with 3G or Long Term Evolution (LTE) specified in the 3rd Generation Partnership Project (3GPP). The public radio communication network 30 includes a radio base station 40 and a Home Subscriber Server 50 (hereinafter, the HSS 50). The HSS 50 manages the terminal devices (the terminal devices 200A, 201A, and the like). In the present embodiment, the HSS 50 configures a subscriber management apparatus.

In addition, the public radio communication network 30 forms a transport network of 3G/LTE network by using a Mobility Management Entity (MME), an RNC (Radio Network Controller), a Serving GPRS Support Node/Serving Gateway (SGSN/SGW), a Gate GPRS Support Node/PDN Gateway (GGSN/PGW), and the like, which are not illustrated.

The radio base station 40 configures Access Network Domain specified by the 3GPP. The Access Network Domain includes the radio base station 40 (NodeB or eNodeB), and the RNC. In addition, the transport network of 3G/LTE network configures Serving Network Domain specified by the 3GPP. The Serving Network Domain includes the SGSN, a Visitor Location Register (VLR), a Serving Gateway (SGW), and the like. The HSS 50 configures Home Environment Domain specified by the 3GPP. The Home Environment Domain includes a Home Location Register (HLR) and an Authentication Center (AuC).

In the present embodiment, with the configuration mentioned above, communications with the security ensured are enabled between the public radio communication network 30 and the near field communication network 60 (the terminal devices 200A, 201A, and the like) via the relay apparatus 100.

The near field communication network 60 is an autonomous distributed near field communication network in conformity with IEEE802.15.4e/g, and configures an autonomous distributed network of what is termed as a smart utility network (SUN) or a field area network (FAN). Note that the following description is provided mainly by taking the FAN as an example. The near field communication network 60 is configured by the multiple terminal devices (the terminal devices 200A, 201A, and the like) as described above.

The near field communication network 60 covers an area (a communication distance for terminal devices) of approximately 500 m. Meanwhile, the public radio communication network 30, typified by 3G or LTE, for example, covers a wider area than the near field communication network 60.

Each of the multiple terminal devices 200A, 201A, and the like configuring the near field communication network 60 has a function of a device such as an electric power meter of measuring a power consumption or the like, and is installed in a household (residence). The terminal device receives commands from the MDMS 20 and transmits small data such as measurement data of the electric power meter.

In addition, as similar to the relay apparatus 100, the terminal devices 200A, 201A, and the like in the present embodiment each have a function as user equipment (UE) of 3G or LTE, or more specifically a function as MTC-UE of executing Machine Type Communication (MTC).

The relay apparatus 100 is provided between the near field communication network 60 and the public radio communication network 30. The relay apparatus 100 is an apparatus having a function of a concentrator of the near field communication network 60, and a function of an access router positioned at a terminal end of the public radio communication network 30. More specifically, the relay apparatus 100 has both the function of the concentrator having security functions to authenticate each of the terminal devices such as the terminal devices 200A, 201A, and to provide integrity and confidentiality of data between the relay apparatus 100 and the terminal devices, and the function of the user equipment (UE) as the terminal end of the public radio communication network 30.

The relay apparatus 100 is equipped with a Universal Subscriber Identity Module (USIM) 150 which is similar to a USIM loaded in 3G or LTE user equipment (UE). Similarly, each of the terminal devices 200A, 201A is equipped with a USIM 250. The USIM 150 and the USIM 250 each store a secret key necessary for security setup processing with the HSS 50 and the relay apparatus 100.

### (2) Functional Block Configuration of Communication System

Next, a functional block configuration of the communication system 10 is described. Specifically, functional block configurations of the relay apparatus 100A and the terminal device 200A are described.

### (2.1) Relay Apparatus 100A

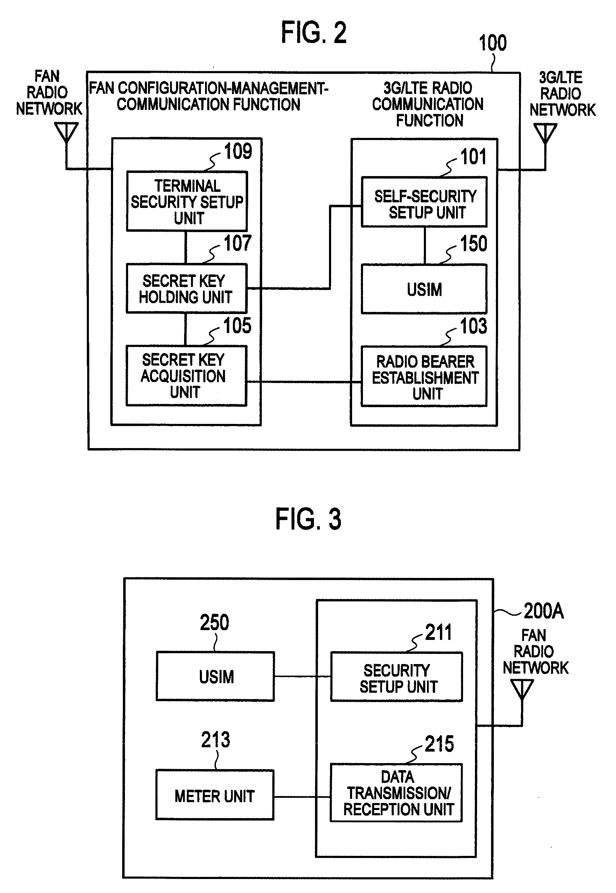

Fig. 2 is a functional block configuration diagram of the relay apparatus 100A. As illustrated in Fig. 2, the relay apparatus 100A includes a self-security setup unit 101, a radio bearer establishment unit 103, a secret key acquisition unit 105, a secret key holding unit 107, a terminal security setup unit 109, and the USIM 150.

The self-security setup unit 101 executes security setup including authentication processing of the relay apparatus 100 with the public radio communication network 30, by using identification information of the relay apparatus 100 in the public radio communication network 30 and a secret key (relay apparatus secret key) of the relay apparatus 100 in the public radio communication network 30.

Specifically, the self-security setup unit 101 transmits an Initial NAS Message to the MME in accordance with a security procedure specified by the 3GPP, by using the identification information (apparatus ID) held in the USIM 150 and configured to uniquely identify the relay apparatus 100 (in the case of LTE). Here, it should be noted that the self-security setup unit 101 only transmits the apparatus ID, and the HSS 50 is able to acquire the secret key associated with the apparatus ID. Thus, the secret key is not transmitted via the public radio communication network 30 carelessly. To be more specific, with start of the security procedure, the HSS 50 derives the secret key associated with a particular apparatus ID, generates K-asme and other things from the secret key, and transmits the generated K-asme and other things to the MME. The MME generates K-NAS-encryption and K-NAS-integrity based on the K-asme and other things, and transmits an Authentication Request (RAND and AUTN) to the relay apparatus 100 (user equipment).

Then, the self-security setup unit 101 computes an Authentication Response (RES) from the received RAND and AUTN, and transmits the computation result to the MME. The MME authenticates the relay apparatus 100 depending on whether or not the received RES matches XRES acquired from the HSS 50. Thus, the authentication of the relay apparatus 100 is completed.

The radio bearer establishment unit 103 establishes a radio bearer together with a radio access apparatus of the public radio communication network 30 by using the secret key (relay apparatus secret key) associated with the relay apparatus 100 in the public radio communication network 30. Specifically, the radio bearer establishment unit 103 establishes the radio bearer with the radio base station 40. In this radio bearer, the integrity and confidentiality are secured with the foregoing K-NAS-encryption and K-NAS-integrity held in both the relay apparatus 100 and the radio base station 40.

Incidentally, the relay apparatus 100 also has a function of routing data by using the radio bearer, the data being to be received and transmitted from and to the public radio communication network 30 and each of the terminal devices configuring the near field communication network 60, but detailed description of the routing is omitted herein.

The secret key acquisition unit 105 acquires, from the HSS 50, the secret keys (terminal device secret keys) associated with the respective terminal devices configuring the near field communication network 60. Specifically, the secret key acquisition unit 105 acquires the secret keys associated with the terminal devices from the HSS 50 via the radio bearer established by the radio bearer establishment unit 103.

Moreover, the secret key acquisition unit 105 acquires addition information via the near field communication network 60, the addition information indicating that a terminal device is newly added to the near field communication network 60. Specifically, the secret key acquisition unit 105 acquires the addition information from the terminal device newly added to the near field communication network 60. When acquiring the addition information, the secret key acquisition unit 105 acquires the secret key associated with the terminal device from the HSS 50 via the radio bearer established with the HSS 50.

The secret key holding unit 107 holds the secret key acquired by the secret key acquisition unit 105. Specifically, the secret key holding unit 107 is capable of holding the secret key associated with each of the terminal devices configuring the near field communication network 60. In other words, the secret key holding unit 107 is capable of holding as many secret keys as the number of the terminal devices configuring the near field communication network 60.

The terminal security setup unit 109 executes the security setup processing including the authentication with the terminal device by using the secret key acquired by the secret key acquisition unit 105 and held by the secret key holding unit 107. To be specific, for the terminal devices 200A, 201A, and the like, the terminal security setup unit 109 functions as an Authentication Center (AuC) specified in the 3GPP. Specifically, the function serving as a v-AuC in the relay apparatus 100 in Fig. 1 is implemented by the secret key acquisition unit 105, the secret key holding unit 107, and the terminal security setup unit 109.

The terminal security setup unit 109 executes the security procedure with each of the terminal devices by using the secret key associated with the terminal device. Note that the security procedure executed herein is the same or similar to the procedure executed by the self-security setup unit 101 with the HSS 50.

In other words, the secret key (terminal device secret key) used between the relay apparatus 100 and the terminal device has the same configuration as the secret key (relay apparatus secret key) used between the relay apparatus 100 and the HSS 50, and the same or similar security procedure using the secret key is executed between the relay apparatus 100 and the terminal device and between the relay apparatus 100 and the HSS 50.

### (2.2) Terminal Device 200A

Fig. 3 is a functional block configuration diagram of the terminal device 200A. As illustrated in Fig. 3, the terminal device 200A includes a security setup unit 211, a meter unit 213, a data transmission/reception unit 215, and the USIM 250. Here, the terminal device 201A also has a functional block configuration similar to that of the terminal device 200A.

The security setup unit 211 executes security setup processing including authentication with the relay apparatus 100 by using the secret key (terminal device secret key) of the terminal device 200A held by the USIM 250. Specifically, the security setup unit 211 operates as user equipment (UE, or more specifically MTC-UE) in conformity with the aforementioned security procedure specified in the 3GPP, and executes the security setup processing including the authentication with the relay apparatus 100.

Alternatively, if the relay apparatus 100 is not usable, the security setup unit 211 may execute security processing including authentication directly with the HSS 50 by using the secret key of the terminal device 200A. Specifically, if the relay apparatus 100 is not operating normally due to a failure, or if the relay apparatus 100 is removed due to a reason such as a scale-down of the near field communication network 60, the security setup unit 211 executes the security setup processing including the authentication with the HSS 50 by using the secret key of the terminal device 200A. To be more precise, the secret key of the terminal device 200A acquired and held by the relay apparatus 100 using the identification information (device ID) of the terminal device 200A is originally held by the HSS 50, and the device ID and the secret key are associated with each other in the HSS 50. Thus, the security setup processing not involving the relay apparatus 100 can be performed.

The meter unit 213 measures a power consumption or the like in a household (residence) where the terminal device 200A is installed. For example, the meter unit 213 is able to measure data such as a power consumption based on a command outputted from the data transmission/reception unit 215.

Then, the meter unit 213 outputs the measured data such as the power consumption to the data transmission/reception unit 215. Here, what is measured by the meter unit 213 is not limited to the power consumption, but may be a tap water or gas consumption.

The data transmission/reception unit 215 is connected to the meter unit 213. The data transmission/reception unit 215 outputs commands received from the MDMS 20 to the meter unit 213, and transmits data outputted from the meter unit 213 to the MDMS 20. Incidentally, the commands and data are transmitted and received via a communication bearer established between the relay apparatus 100 and the GGSN/PGW.

In addition, if the terminal device 200A is newly added to the near field communication network 60, or is moved to the near field communication network 60 from another near field communication network, the data transmission/reception unit 215 can send the relay apparatus 100 the addition information indicating that the terminal device 200A is newly added to the near field communication network 60.

The USIM 250 holds the device ID and the secret key, both of which are unique to the terminal device 200A. Specifically, the USIM 250 stores the device ID, the secret key, and the like to be used to generate various kinds of keys necessary in the security setup processing with the relay apparatus 100 (or the HSS 50), as described above.

### (3) Operation of Communication System

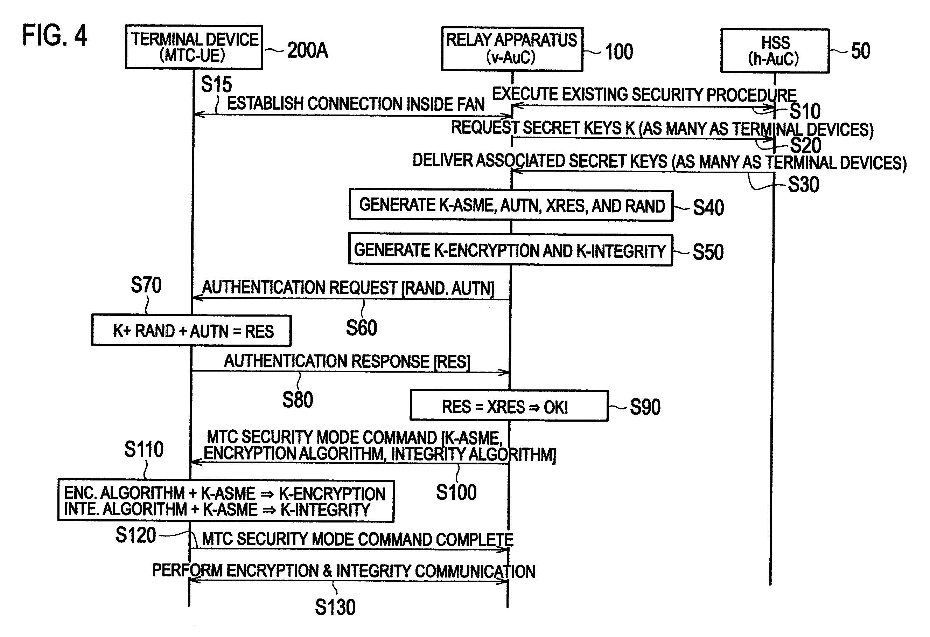

Next, description is provided for an operation of the foregoing communication system 10. Specifically, description is provided for the security setup procedure executed by the HSS 50, the relay apparatus 100, and the terminal device 200A. Fig. 4 illustrates the security procedure executed by the HSS 50, the relay apparatus 100, and the terminal device 200A.

As illustrated in Fig. 4, the HSS 50 and the relay apparatus 100 execute the existing 3G/LTE security procedure (S10). To be specific, a radio bearer in which integrity and confidentiality are ensured is established between the relay apparatus 100 and the radio base station 40 (see Fig. 1). Meanwhile, the authentication of the relay apparatus 100 is executed between the relay apparatus 100 and the HSS 50.

More specifically, this procedure is based on the precondition that the relay apparatus 100 is equipped with the USIM 150 (UICC) that is similar to the USIM of usual user equipment (UE) specified in the 3GPP as describe above, and is capable of causing the public radio communication network 30 to authenticate the relay apparatus 100, and establishing connection of the relay apparatus 100 to the public radio communication network 30.

The relay apparatus 100 and the terminal device 200A execute connection processing such that they can communicate with each other in the near field communication network 60 (FAN) (S15). Here, the connection processing herein is processing in accordance with the capabilities of the near field communication network 60, typified by IEEE802.15.4e/g, for example. Incidentally, the processing in S15 may be executed prior to the processing in S10.

The relay apparatus 100 detects the number of terminal devices (MTC-UE) under the near field communication network 60 to which the relay apparatus 100 belongs. The relay apparatus 100 requests the HSS 50 to transmit as many secret keys K as the number of the detected terminal devices (S20). The request made herein includes the identification information (device ID) of each of the terminal devices, with which the HSS 50 can derive the secret key K for the terminal device. Incidentally, the device ID of each of the terminal devices (MTC-UE) is stored in advance in the HSS 50, and the correspondence between the device ID and the secret key K is also managed therein.

The HSS 50 delivers, to the relay apparatus 100, the secret keys K associated with the device IDs received from the relay apparatus 100 (S30). In other words, the HSS 50 sends the relay apparatus 100 as many secret keys K as the number requested by the relay apparatus 100 (each secret key K is solely associated with a particular terminal device).

With such delivery of the secret keys K from the HSS 50 to the relay apparatus 100, an entity of the security setup function of the terminal device (MTC-UE) is delegated from the HSS 50 (home-AuC (h-AuC)) that originally functions as the Authentication Center (AuC) to the relay apparatus 100 that functions as the visited-AuC (v-AuC). As a result, the HSS 50 (h-AuC) does not have to execute the processing for the authentication directly with the MTC-UE, and the processing load of the HSS 50 for the authentication of the terminal device is largely reduced.

The processing in step S40 and the following steps is almost the same as in the security procedure conventionally executed in the 3GPP between the HSS 50 and UE used as a mobile phone terminal. The relay apparatus 100 (v-AuC) to which the entity of authentication is delegated from the HSS 50 (h-AuC) generates K-asme, AUTN, XRES, and RAND from the secret key K in accordance with the security procedure specified in the 3GPP (S40). In addition, the relay apparatus 100 (v-AuC) generates security parameters, namely, K-encryption and K-integrity, which are necessary to ensure the safety in radio communications in the near field communication network 60 (FAN) (S50).

The relay apparatus 100 (v-AuC) transmits an Authentication Request containing the generated RAND and AUTN to the terminal device 200A (S60). Incidentally, although not illustrated in Fig. 4, the same or similar processing is executed for other terminal devices (for example, the terminal device 201A).

The terminal device 200A (MTC-UE) executes the authentication and necessary security setup processing based on the received Authentication Request (S70). Specifically, the terminal device 200A computes a response (RES) using the secret key K of the terminal device 200A stored in the USIM 250 and using the RAND and AUTN. The terminal device 200A transmits an Authentication Response containing the computed RES to the relay apparatus 100 (v-AuC) (S80).

The relay apparatus 100 (v-AuC) authenticates the terminal device 200A as a rightful device (MTC-UE) if the received RES matches the XRES generated in step S40 (S90). The relay apparatus 100 (v-AuC) transmits information (MTC Security Mode Command) necessary to generate encryption algorithm and integrity algorithm to the terminal device 200A (S100).

The terminal device 200A (MTC-UE) generates K-encryption and K-integrity based on the received information (S110). Specifically, the terminal device 200A (MTC-UE) generates the K-encryption (encryption key) using the encryption algorithm and the K-asme, and generates the K-integrity (integrity verification key) using the integrity algorithm and the K-asme.

After generating the K-encryption and the K-integrity, the terminal device 200A notifies the relay apparatus 100 (v-AuC) that the security procedure is completed (S120).

In this way, the relay apparatus 100 executes the security setup processing with the terminal device 200A, and the terminal device 200A executes a series of the security setup processing including authentication with the relay apparatus 100 by using the device ID of the terminal device 200A held in the USIM 250. After that, the relay apparatus 100 and the terminal device 200A can communicate with each other safely under protection with the security parameters, namely, the K-encryption (encryption key) and the K-integrity (integrity verification key) (S130).

Note that the aforementioned processing in step S20 and the following steps is also executed if a terminal device is newly added to the near field communication network 60, or if a terminal device is moved from another near field communication network to the near field communication network 60 to which the relay apparatus 100 belongs.

Moreover, the frequency of reauthentication of the terminal device 200A once authenticated and the frequency of exchange of the K-encryption and the K-integrity between the relay apparatus 100 and the terminal device 200A are determined according to a security policy defined in the relay apparatus 100 (v-AuC). Since the relay apparatus 100 (v-AuC) stores a huge volume of security information, the relay apparatus 100 (v-AuC) has a tamper resistant function, namely, a self-protective function such that the relay apparatus 100 is generally prohibited from being dismantled or removed, and is disabled from being used even if such a manipulation is performed from outside.

Moreover, in the present embodiment, the security methods applied between the relay apparatus 100 and the terminal device 200A (the method of generating various kinds of keys, the authentication method, and the like) may be different from the methods specified in the public radio communication network 30 (the methods specified in 3G or LTE). For example, the security methods applied between the relay apparatus 100 and the terminal device 200A may be simpler with lower processing load than the methods specified in the public radio communication network 30.

### (4) Operation and Effect

According to the communication system 10, the relay apparatus 100 acquires the secret key K uniquely associated with a terminal device (for example, the terminal device 200A) from the HSS 50 via the radio bearer with the security ensured, and executes the security setup processing including the authentication with the terminal device 200A by using the acquired secret key K. Similarly, the terminal device 200A executes the security setup processing including the authentication with the relay apparatus 100 by using the secret key K of the terminal device 200A held in the terminal device 200A.

As a result, even when a near field communication network, as typified by IEEE802.15.4e/g, such as a smart utility network (SUN) or a field area network (FAN) expected to be used for smart meters or scattered sensor networks is accommodated in the public radio communication network 30 (3G/LTE), the security at the level same or similar to the level in the public radio communication network 30 can be extendedly applied to this near field communication network.

In particular, the relay apparatus 100 (v-AuC) is enabled to acquire information necessary for the security setup such as the secret key K of each terminal device, from the HSS 50 via the radio bearer with the security established in accordance with the security procedure in the public radio communication network 30. In addition, since the terminal device 200A is equipped with the USIM 250, the terminal device 200A, albeit being a terminal device in conformity with IEEE802.15.4e/g or the like in the near field communication network (FAN), is enabled to function as MTC-UE which can execute the security procedure same or similar to the procedure of usual UE.

This can provide a high security level (authentication, integrity, and confidentiality) even in the case of transmitting and receiving data on power consumptions or the like directly related to billing to users. In other words, in the present embodiment, the high security level using the USIM (UICC) which has been developed in 3G or LTE can be easily and surely extended in a near field communication network such as an FAN.

Meanwhile, the installation of electric power measurement devices (meters) is primarily based on a plan of an electric power provider or the like. In the case of installation of a large number of electric power measurement devices at one time, the advantage of scale in the transport network of 3G/LTE network where the near field communication network is accommodated can be obtained if the relay apparatus 100 is provided with the foregoing functions. On the other hand, in the case of installation of a small number of power electric measurement devices, that is, several devices, in a certain city or town, the same or similar security level can be offered without the relay apparatus 100 installed. Thus, according to the present embodiment, it is possible to flexibly attain an installation plan of electric power measurement devices of an electric power provider or the like, and to maintain the economy of scale of the transport network of 3G/LTE network.

Moreover, in the present embodiment, the security procedure executed by the relay apparatus 100 (v-AuC) and the terminal device 200A (MTC-UE) is an independent procedure, and therefore may employ methods different from the security methods specified in the public radio communication network 30. Thus, any flexible security methods can be selected appropriately depending on the conditions of a network such as the capabilities and apparatuses/devices.

Further, in the present embodiment, the secret key used between the relay apparatus 100 and the terminal device has the same configuration as the secret key used between the relay apparatus 100 and the public radio communication network 30. For this reason, if the relay apparatus 100 is not usable, the terminal device can execute the authentication processing with the HSS 50 by using the secret key of the terminal device itself. Thus, if the relay apparatus 100 is not usable, the terminal device can directly access the HSS 50, which enhances the availability of communications while ensuring the necessary security level.

### (5) Other Embodiment

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

For example, the foregoing embodiment of the present invention is described by taking an SUN or FAN as an example of an autonomous distributed near field communication network. Instead of the SUN or FAN, a license-exempt radio communication network such as a wireless LAN or a WiMAX (registered trademark) may be employed.

In addition, the information stored in the USIM (UICC) loaded in the terminal device (MTC-UE) may be information settable by being written with software. By setting the information with the software as mentioned above, it is possible to manage the secret keys of a large number of MTC-UEs more flexibly than otherwise.

The features of the present embodiment may also be expressed as follows. A first feature of the present invention is summarized as a communication system 10 (communication system) including: a terminal device (for example, a terminal device 200A or 201A) capable of configuring a near field communication network 60 (near field communication network) ; and a relay apparatus 100 (relay apparatus) provided between the near field communication network and a public radio communication network 30 (public radio communication network) that includes an HSS 50 (subscriber management apparatus) configured to manage the terminal device and covers a wider area than the near field communication network. Here, the relay apparatus includes: a radio bearer establishment unit 103 (radio bearer establishment unit) for establishing a radio bearer with security ensured with a radio base station 40 (radio base station) configuring the public radio communication network, by using a relay apparatus secret key associated with the relay apparatus in the public radio communication network; a secret key acquisition unit 105 (secret key acquisition unit) for acquiring a terminal device secret key associated with the terminal device via the radio bearer from the subscriber management apparatus; and a terminal security setup unit 109 (terminal security setup unit) for executing security setup processing including authentication of the terminal device by using the terminal device secret key acquired by the secret key acquisition unit, and the terminal device includes: a USIM 250 (secret key holding unit) for holding the terminal device secret key associated with the terminal device; and a security setup unit 211 (security setup unit) for executing the security setup processing including the authentication with the relay apparatus by using the terminal device secret key held by the secret key holding unit.

In the first feature of the present invention, the terminal device secret key used between the relay apparatus and the terminal device may have the same configuration as the relay apparatus secret key used between the relay apparatus and the subscriber management apparatus, and if the relay apparatus is not usable, the security setup unit may execute authentication processing with the subscriber management apparatus by using the terminal device secret key held by the secret key holding unit.

In the first feature of the present invention, the secret key acquisition unit may acquire addition information indicating that the terminal device is newly added to the near field communication network, via the near field communication network from the terminal device newly added, and when acquiring the addition information, the secret key acquisition unit may acquire the terminal device secret key associated with the terminal device via the radio bearer from the subscriber management apparatus.

A second feature of the present invention is summarized as a relay apparatus provided between a near field communication network configured by a plurality of terminal devices, and a public radio communication network that includes a subscriber management apparatus configured to manage the terminal devices and covers a wider area than the near field communication network, the relay apparatus including: a radio bearer establishment unit for establishing a radio bearer with security ensured with a radio base station configuring the public radio communication network, by using a relay apparatus secret key associated with the relay apparatus in the public radio communication network; a secret key acquisition unit for acquiring a terminal device secret key associated with any of the terminal devices via the radio bearer from the subscriber management apparatus; and a terminal security setup unit for executing security setup processing including authentication of the terminal device by using the terminal device secret key acquired by the secret key acquisition unit.

In the second feature of the present invention, the secret key acquisition unit may acquire addition information indicating that any of the terminal devices is newly added to the near field communication network, via the near field communication network from the terminal device newly added, and when acquiring the addition information, the secret key acquisition unit may acquire the terminal device secret key associated with the terminal device via the radio bearer from the subscriber management apparatus.

A third feature of the present invention is summarized as a communication method to be executed by a terminal device capable of configuring a near field communication network, and a relay apparatus provided between the near field communication network and a public radio communication network that includes a subscriber management apparatus configured to manage the terminal device and covers a wider area than the near field communication network, the method including the steps of: causing the relay apparatus to establish a radio bearer with security ensured with a radio base station configuring the public radio communication network, by using a relay apparatus secret key associated with the relay apparatus in the public radio communication network; causing the relay apparatus to acquire a terminal device secret key associated with the terminal device via the radio bearer from the subscriber management apparatus; and causing the relay apparatus to execute security setup processing including authentication with the terminal device, by using the terminal device secret key acquired by the relay apparatus, while causing the terminal device to execute the security setup processing including the authentication of the relay apparatus, by using a relay apparatus secret key held by the terminal device and associated with the terminal device.

As described above, the present invention naturally includes various embodiments which are not described herein. Accordingly, the technical scope of the present invention should be determined only by the matters to define the invention in the scope of claims regarded as appropriate based on the description.

Note that the entire content of Japanese Patent Application No. 2013-067138 (filed on March 27, 2013) is incorporated by reference in the present specification.

### INDUSTRIAL APPLICABILITY

According to the features of the present invention, it is possible to provide a communication system, a relay apparatus, and a communication method capable of achieving high security in a case of controlling devices such as electric power meters and acquiring data from the devices by connecting an autonomous distributed near field communication network such as a smart utility network to a public radio communication network.

### EXPLANATION OF THE REFERENCE NUMERALS

- 10: communication system
- 20: MDMS
- 30: public radio communication network
- 40: radio base station
- 50: HSS
- 60: near field communication network
- 100: relay apparatus
- 101: security setup unit
- 103: radio bearer establishment unit
- 105: secret key acquisition unit
- 107: secret key holding unit
- 109: terminal security setup unit
- 150: USIM
- 200A, 201A: terminal device
- 211: security setup unit
- 213: meter unit
- 215: data transmission/reception unit
- 250: USIM

## Claims

1. A communication system comprising:
a terminal device capable of configuring a near field communication network; and
a relay apparatus provided between the near field communication network and a public radio communication network that includes a subscriber management apparatus configured to manage the terminal device and covers a wider area than the near field communication network, wherein
the relay apparatus comprises:
a radio bearer establishment unit for establishing a radio bearer with security ensured with a radio base station configuring the public radio communication network, by using a relay apparatus secret key associated with the relay apparatus in the public radio communication network;
a secret key acquisition unit for acquiring a terminal device secret key associated with the terminal device via the radio bearer from the subscriber management apparatus; and
a terminal security setup unit for executing security setup processing including authentication of the terminal device by using the terminal device secret key acquired by the secret key acquisition unit, and
the terminal device comprises:
a secret key holding unit for holding the terminal device secret key associated with the terminal device; and
a security setup unit for executing the security setup processing including the authentication with the relay apparatus by using the terminal device secret key held by the secret key holding unit.

2. The communication system according to claim 1, wherein
the terminal device secret key used between the relay apparatus and the terminal device has the same configuration as the relay apparatus secret key used between the relay apparatus and the subscriber management apparatus, and
if the relay apparatus is not usable, the security setup unit executes authentication processing with the subscriber management apparatus by using the terminal device secret key held by the secret key holding unit.

3. The communication system according to claim 1, wherein
the secret key acquisition unit acquires addition information indicating that the terminal device is newly added to the near field communication network, via the near field communication network from the terminal device newly added, and
when acquiring the addition information, the secret key acquisition unit acquires the terminal device secret key associated with the terminal device via the radio bearer from the subscriber management apparatus.

4. A relay apparatus provided between a near field communication network configured by a plurality of terminal devices, and a public radio communication network that includes a subscriber management apparatus configured to manage the terminal devices and covers a wider area than the near field communication network, the relay apparatus comprising:
a radio bearer establishment unit for establishing a radio bearer with security ensured with a radio base station configuring the public radio communication network, by using a relay apparatus secret key associated with the relay apparatus in the public radio communication network;
a secret key acquisition unit for acquiring a terminal device secret key associated with any of the terminal devices via the radio bearer from the subscriber management apparatus; and
a terminal security setup unit for executing security setup processing including authentication of the terminal device by using the terminal device secret key acquired by the secret key acquisition unit.

5. The relay apparatus according to claim 4, wherein
the secret key acquisition unit acquires addition information indicating that any of the terminal devices is newly added to the near field communication network, via the near field communication network from the terminal device newly added, and
when acquiring the addition information, the secret key acquisition unit acquires the terminal device secret key associated with the terminal device via the radio bearer from the subscriber management apparatus.

6. A communication method to be executed by a terminal device capable of configuring a near field communication network, and a relay apparatus provided between the near field communication network and a public radio communication network that includes a subscriber management apparatus configured to manage the terminal device and covers a wider area than the near field communication network, the method comprising the steps of:
causing the relay apparatus to establish a radio bearer with security ensured with a radio base station configuring the public radio communication network, by using a relay apparatus secret key associated with the relay apparatus in the public radio communication network;
causing the relay apparatus to acquire a terminal device secret key associated with the terminal device via the radio bearer from the subscriber management apparatus; and
causing the relay apparatus to execute security setup processing including authentication with the terminal device, by using the terminal device secret key acquired by the relay apparatus, while causing the terminal device to execute the security setup processing including the authentication of the relay apparatus, by using a relay apparatus secret key held by the terminal device and associated with the terminal device.
